# EUROPÄISCHE PATENTSCHRIFT

(11) **EP 1 322 488 B1**
(45) Veröffentlichungstag und Bekanntmachung des Hinweises auf die Patenterteilung: **04.08.2004**
(21) Anmeldenummer: 02800602.1
(22) Anmeldetag: 07.10.2002
(51) Int. Cl.: B60J 7/14, B60J 7/20

(54) **HARDTOP-FAHRZEUGDACH MIT MINDESTENS ZWEI STARREN DACHTEILEN**
HARDTOP VEHICLE ROOF WITH AT LEAST TWO RIGID ROOF PARTS
TOIT DE VEHICULE DE TYPE TOIT AMOVIBLE COMPRENANT AU MOINS DEUX PARTIES DE TOIT RIGIDES

(30) Priorität: 08.10.2001 DE 10149456
(43) Veröffentlichungstag der Anmeldung: 02.07.2003
(73) Patentinhaber: CTS Fahrzeug-Dachsysteme GmbH, 21079 Hamburg (DE)
(72) Erfinder: PAPENDORF, Marcus, 74354 Besigheim (DE); HAHN, Gerald, 21149 Hamburg (DE)
(74) Vertreter: Müller, Gottfried
(86) Internationale Anmeldenummer: PCT/EP2002/011208
(87) Internationale Veröffentlichungsnummer: WO 2003/031213

(56) Entgegenhaltungen:
- EP-A- 0 835 779
- WO-A-03/024731
- DE-A- 10 059 342
- DE-A- 19 846 006

## Beschreibung

Die Erfindung bezieht sich auf ein Hardtop-Fahrzeugdach mit drei starren Dachteilen nach dem Oberbegriff des Anspruches 1.

Ein aus drei in sich starren Dachteilen bestehendes Fahrzeugdach ist aus der Druckschrift EP 0 835 779 A1 bekannt. Die Dachteile sind in Schließposition, in welcher der Fahrzeuginnenraum überdeckt ist, in Fahrzeuglangsrichtung hintereinander liegend angeordnet und können zum Öffnen des Daches in einen rückwärtigen Verdeckkasten versenkt werden, welcher von einem Verdeckkastendeckel zu verschließen ist. Das hintere Dachteil ist über eine zugeordnete Dachteilkinematik schwenkbeweglich mit der Fahrzeugkarosserie verbunden. Das mittlere Dachteil ist am hinteren Dachteil und das vordere Dachteil am mittleren Dachteil angelenkt. Bei der Überführung von Schließ- in Ablageposition wird das hintere Dachteil nach hinten in den Verdeckkasten verschwenkt, zugleich wird das vordere Dachteil zwischen das mittlere und das hintere Dachteil eingeklappt, so dass in der Ablageposition die drei Dachteile ein übereinander liegendes Dachpaket bilden, wobei das hintere und das vordere Dachteil mit ihrer Außenseite nach unten und das mittlere Dachteil mit seiner Außenseite nach oben abgelegt ist.

Diese Ausführung weist den Nachteil auf, dass lediglich das hintere und das vordere Dachteil gleichsinnig abgelegt sind, jedoch eine gegensinnige Ablageposition zum mittleren Dachteil aufweisen, wodurch grundsätzlich das Ablagevolumen in Vertikalrichtung erhöht ist. Die Bombierung von hinterem und vorderem Dachteil zeigt nach unten, wodurch der frei verfügbare Stauraum zur Ablage von Gepäck stark eingeschränkt ist.

Aus der Druckschrift DE 198 46 006 A1 ist ein Hardtop-Fahrzeugdach mit drei aneinander gekoppelten Dachteilen bekannt, von denen das hinterste Dachteil zugleich einen coupeartigen Heckdeckel bildet. Dieses Fahrzeugdach besitzt eine ungünstige Gewichtsverteilung, da die einzelnen Dachteile wie in einer kinematischen Kette aneinander hängen und nur der coupeartige Heckdeckel an der Fahrzeugkarosserie abgestützt ist. Aufgrund dieser Gewichtsverteilung müssen die hinteren Dachteile sowie die den jeweiligen Dachteilen zugeordneten Stellkinematiken zur Aufnahme hoher Kräfte ausgebildet sein.

Die nicht vorveröffentlichte Druckschrift DE 100 59 342 A1 zeigt ein zweiteiliges Hardtop, bei dem das hintere Dachteil unmittelbar an der Heckklappe schwenkbeweglich gehalten ist und das davor liegende, vordere Dachteil unmittelbar an der Fahrzeugkarosserie angekoppelt ist. In Ablageposition liegen beide Dachteile gleichsinnig übereinander.

Auch aus der nachveröffentlichten Druckschrift WO 03/024731 A1 ist ein mehrteiliges Hardtop-Fahrzeugdach bekannt. Ein hinteres Dachteil des Hardtops ist verschieblich am Verdeckkastendeckel gehalten und kann aus einer gegenüber dem Verdeckkasten vorgelagerten Position, die der Schließstellung des Fahrzeugdaches entspricht, in eine abgesenkte Position unterhalb des Verdeckkastendeckels verschoben werden, die dieses Dachteil in der Ablageposition des Daches einnimmt.

Der Erfindung liegt das Problem zugrunde, ein Hardtop-Fahrzeugdach zu schaffen, welches in Ablageposition ein verhältnismäßig geringes Ablagevolumen aufweist. Das verringerte Ablagevolumen soll insbesondere mit vergleichsweise einfachen Mitteln erreicht werden.

Dieses Problem wird erfindungsgemäß mit den Merkmalen des Anspruches 1 gelöst. Die Unteransprüche geben zweckmäßige Weiterbildungen an.

Das hintere Dachteil des Hardtop-Fahrzeugdaches ist am Verdeckkastendeckel angeordnet, welcher Träger dieses Dachteiles ist. Diese Ausführung bietet den Vorteil, dass die Kinematik des Verdeckkastendeckels - bzw. des Heckdeckels, sofern dieser mit dem Verdeckkastendeckel identisch ist - für die Aufstellbewegung des hinteren Dachteiles ausgenutzt werden kann, wodurch ein ausreichend großer Durchtritt bzw. Bewegungsraum für die Überführung des bzw. der vorderen Dachteile geschaffen wird. Eine separate Anbindung des hinteren Dachteiles unmittelbar an der Fahrzeugkarosserie kann entfallen.

Das dem hinteren Dachteil unmittelbar vorgelagerte Dachteil - im Falle eines dreiteiligen Hardtop-Fahrzeugdaches das mittlere Dachteil - ist zweckmäßig direkt an der Fahrzeugkarosserie gehalten und kann unabhängig vom hinteren Dachteil ohne jegliche Bewegungseinschränkung zwischen Schließ- und Ablageposition verstellt werden.

Diese Ausführung eröffnet die Möglichkeit, das hintere Dachteil und das davor liegende Dachteil gleichsinnig abzulegen, insbesondere in der Weise, dass die Außenseite der Dachteile nach oben zeigt, so dass also jedes Dachteil in Ablageposition die gleiche Ausrichtung beibehält wie in Schließposition. Da die Bombierung der Dachteile in dieser Ausführung nach oben weist, ist das Packungsvolumen des Daches in Ablageposition geringer und es steht im Vergleich zum Stand der Technik ein signifikant größerer Stauraum für die Ablage von Gepäckstücken oder dergleichen zur Verfügung.

Ein weiterer Vorteil dieser Ausführung ist darin zu sehen, dass die Heckscheibe und die C-Säulen, welche üblicherweise Bestandteil des hinteren Dachteiles sind, starr miteinander verbunden sein können, wodurch das hintere Dachteil eine hohe Steifigkeit aufweist. Auf Grund der günstigen Ablageposition kann eine Relativ-Schwenkbewegung der Heckscheibe gegenüber den C-Säulen zur Verbesserung des Packungsvolumens entfallen, wodurch auch eine entsprechende Bewegungskinematik für die Heckscheibe eingespart werden kann.

In einer zweckmäßigen Weiterbildung ist das hintere Dachteil über eine zugeordnete Dachteilkinematik am Verdeckkastendeckel gehalten und kann relativ zum Verdeckkastendeckel eine Schwenk- bzw. Stellbewegung ausführen. Dies eröffnet die Möglichkeit, das Fahrzeugdach sowohl in eine Targastellung, in welcher das hintere Dachteil seine Schließposition relativ zum Verdeckkastendeckel beibehält, als auch in eine Cabrioletposition zu verstellen, in welcher das hintere Dachteil in eine Ablagestellung unterhalb des Verdeckkastendeckels überführt wird. In der Cabrioletposition befindet sich das hintere Dachteil zweckmäßig in einer gleichsinnigen Ablagestellung zum Verdeckkastendeckel, was beispielsweise mittels einer Viergelenkkinematik zu erreichen ist.

Im Falle einer dreiteiligen Ausführung des Hardtop-Fahrzeugdaches hängen zweckmäßig das vordere und das mittlere Dachteil kinematisch zusammen und ist das mittlere Dachteil über eine ihm zugeordnete Dachteilkinematik verstellbar an der Fahrzeugkarosserie gehalten. In Ablageposition sind vorteilhaft alle drei Dachteile gleichsinnig im Ablageraum verstaut. Zum Ablegen des Fahrzeugdaches kann zunächst der Verdeckkastendeckel einschließlich dem daran angeordneten hinteren Dachteil aufgeschwenkt werden, um einen ausreichenden Durchtritt für das mittlere und vordere Dachteil freizugeben. Anschließend werden vorderes und mittleres Dachteil in den Ablageraum versenkt. Danach wird das hintere Dachteil in eine Position unterhalb des Verdeckkastendeckels verbracht und der Verdeckkastendeckel wieder geschlossen. Das Fahrzeugdach ist nun vollständig im Verdeckkasten bzw. Ablageraum abgelegt.

In einer alternativen Ausführung kann es vorteilhaft sein, bereits zu Beginn der Aufstell- bzw. Öffnungsbewegung des Verdeckkastendeckels das hintere Dachteil in eine gegenüber dem Verdeckkastendeckel abgesenkte Position zu verbringen, um die maximale Höhe des Verbundes aus Verdeckkastendeckel und hinterem Dachteil in der aufgestellten Position zu reduzieren.

Soll eine Targaposition eingestellt werden, so verbleibt das hintere Dachteil in seiner Schließposition relativ zum Verdeckkastendeckel bzw. wird wieder in diese Position verstellt. In diesem Fall sind lediglich das vordere und das mittlere Dachteil in die Ablageposition versenkt.

In bevorzugter Ausführung sind sowohl die Kinematik zwischen hinterem Dachteil und Verdeckkastendeckel als auch zwischen mittlerem Dachteil und Fahrzeugkarosserie und gegebenenfalls auch zwischen vorderem und mittlerem Dachteil jeweils als Viergelenkkinematik ausgeführt. Derartige Viergelenkkinematiken zeichnen sich durch eine einfache Konstruktion, eine hohe Stabilität und eine gute Handhabbarkeit aus.

Weitere Vorteile und zweckmäßige Ausführungen sind den weiteren Ansprüchen, der Figurenbeschreibung und den Zeichnungen zu entnehmen, in denen ein Ausführungsbeispiel zu der Erfindung dargestellt ist. Es zeigen:
- Fig. 1: ein dreiteiliges Hardtop-Fahrzeugdach mit einem vorderen, mittleren und hinteren Dachteil in Schließposition, wobei das hintere Dachteil an einem Heckdeckel befestigt ist, welcher zugleich einen Verdeckkastendeckel für einen Verdeckkasten bildet, das mittlere Fahrzeugdach unmittelbar an der Fahrzeugkarosserie angelenkt ist und das vordere Fahrzeugdach kinematisch an das mittlere Fahrzeugdach gekoppelt ist,
- Fig. 2: das Fahrzeugdach zu Beginn der Öffnungs- bzw. Ablagebewegung mit aufgestelltem Heckdeckel,
- Fig. 3: das Fahrzeugdach zu Beginn des Ablegens von vorderem und mittlerem Dachteil,
- Fig. 4: das Fahrzeugdach mit dem gegenüber dem Heckdeckel abgesenkten hinteren Dachteil,
- Fig. 5: das Fahrzeugdach in Ablageposition.

In den folgenden Figuren sind gleiche Bauteile mit gleichen Bezugszeichen versehen.

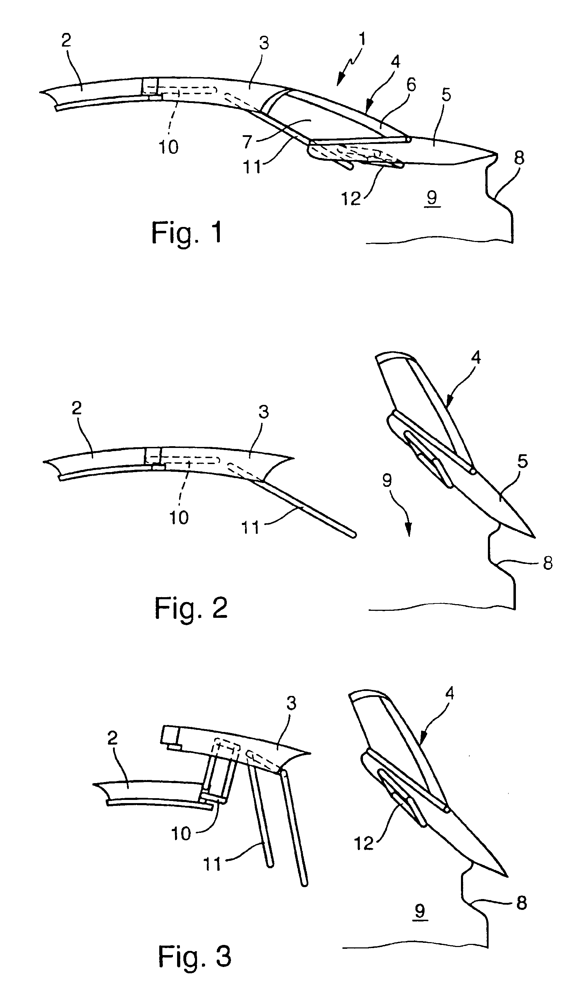

Gemäß Fig. 1 umfasst das Hardtop-Fahrzeugdach 1 insgesamt drei in sich starre Dachteile, nämlich ein vorderes Dachteil 2, ein mittleres Dachteil 3 sowie ein hinteres Dachteil 4, die in der in Fig. 1 gezeigten schließposition des Daches in Fahrzeuglänasrichtung hintereinander liegend angeordnet sind und eine gemeinsame, durchgehende Dachfläche bilden. Das hintere Dachteil 4 umfasst eine Heckscheibe 6 und seitliche C-Saulen 7, die fest mit der Heckscheibe 6 verbunden sind.

Im Heckbereich des Fahrzeuges ist ein Verdeckkastendeckel 5 angeordnet, der an der Fahrzeugkarosserie 8 schwenkbar gehalten ist und in der in Fig. 1 gezeigten Schließposition einen Ablageraum bzw. Verdeckkasten 9 überdeckt, wobei der Verdeckkasten 9 gegebenenfalls Teil des Kofferraumes des Fahrzeuges ist. Der Verdeckkastendeckel 5 ist zweckmäßig mit dem Heck- bzw. Kofferraumdeckel des Fahrzeuges identisch. Der Verdeckkastendeckel 5 ist über eine Deckelkinematik in eine aufgestellte Position zu verschwenken, wodurch ein Durchtritt für die Ablage des Fahrzeugdaches in dem Verdeckkasten 9 freigegeben wird. Hierfür schwenkt der Verdeckkastendeckel 5 um eine dem Heck benachbarte Schwenkachse auf, wodurch der vordere, dem Fahrzeugdach 1 zugewancte Bereich des Verdeckkastendeckels angehoben wird.

Jedem Dachteil ist jeweils eine Dachteilkinematik zugeordnet. Das vordere Dachteil 2 ist über die Dachteilkinematik 10 mit dem mittleren Dachteil 3 verbunden und kann aus der in Fig. 1 gezeigten Schließposition, in der alle Dachteile hintereinander liegend angeordnet sind, in eine parallel zum mittleren Dachteil verschobene und nach unten versetzte Position verstellt werden, in der das vordere Dachteil 2 sich unmittelbar unterhalb des mittleren Dachteiles 3 befindet und gleichsinnig zu diesem ausgerichtet ist. Das mittlere Dachteil 4 ist über die Dachteilkinematik 11 unmittelbar mit der Fahrzeugkarosserie verbunden. Das hintere Dachteil 4 ist über die Dachteilkinematik 12 ausschließlich am Verdeckkastendeckel 5 gehalten.

Fig. 2 zeigt den Beginn der Ablagebewegung des Fahrzeugdaches bei der Überführung von Schließstellung in Ablagestellung. Der Verdeckkastendeckel 5 ist in eine aufgeschwenkte Position verstellt, in welcher ein Durchtritt zum Verdeckkasten 9 freigegeben ist. Das hintere Dachteil 4 behält relativ zum Verdeckkastendeckel 5 seine Schließposition bei.

Fig. 3 zeigt den Beginn der Ablagebewegung von vorderem Dachteil 2 und mittlerem Dachteil 3. Die Dachteilkinematiken 10 und 11, die den Dachteilen 2 und 3 zugeordnet sind, sind jeweils als Viergelenkkinematik ausgeführt. Zweckmäßig ist auch die dem hinteren Dachteil 4 zugeordnete Dachteilkinematik 12 als Viergelenkkinematik ausgebildet. Diese Viergelenkkinematiken eröffnen die Möglichkeit, die Dachteile in Ablageposition gleichsinnig zu ihrer Schließposition abzulegen. Wie Fig. 3 zu entnehmen, wird hierfür zunächst zu Beginn der Ablagebewegung nach dem Öffnen des Verdeckkastendeckels 5 das vordere Dachteil 2 in eine Position parallel unterhalb des mittleren Dachteiles 3 verschwenkt. Zugleich wird das mittlere Dachteil 3 über seine Dachteilkinematik 11 in Richtung Ablageposition verstellt.

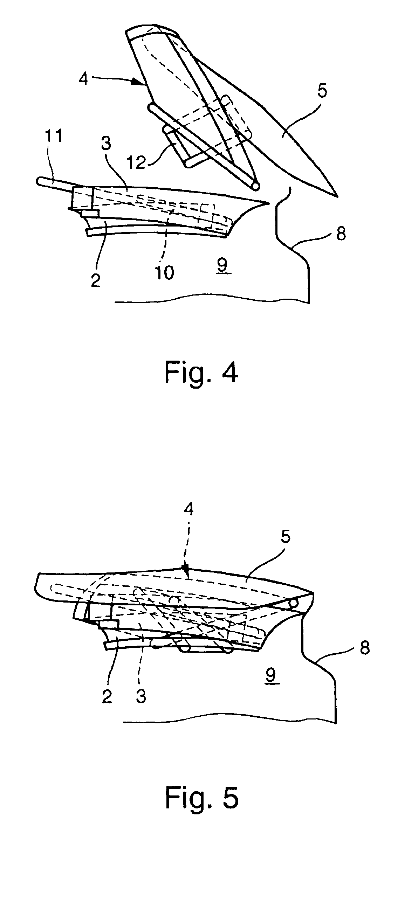

In Fig. 4 befinden sich vorderes Dachteil 2 und mittleres Dachteil 3 bereits in ihrer Ablageposition im Verdeckkasten 9. Das hintere Dachteil 4 wird über seine Dachteilkinematik 12 in eine Stellung unterhalb des Verdeckkastendeckels 5 verbracht. Anschließend wird der Verdeckkastendeckel 5 geschlossen; das Fahrzeugdach hat nun seine in Fig. 5 gezeigte Ablageposition erreicht, in welcher das Dachpaket von unten nach oben mit vorderem Dachteil 2, mittlerem Dachteil 3 und hinterem Dachteil 4 im Verdeckkasten 9 abgelegt ist, der vom Verdeckkastendeckel 5 verschlossen ist.

Der Verdeckkastendeckel 5 kann in der Ausführung als Kofferraum- bzw. Heckdeckel gegebenenfalls auch auf der Heckseite des Fahrzeugs aufklappbar sein, um eine leichtere Beladung des Kofferraumes zu ermöglichen.

## Patentansprüche

1. Hardtop-Fahrzeugdach mit drei starren Dachteilen, die zwischen einer den Fahrzeuginnenraum überdeckenden Schließposition und einer den Fahrzeuginnenraum freigebenden Ablageposition verstellbar sind, wobei die Dachteile (2, 3, 4) in Schließposition in Fahrzeuglängsrichtung hintereinander liegend angeordnet und in Ablageposition in einem Verdeckkasten (9) verstaut sind, der von einem Verdeckkastendeckel (5) zu verschließen ist, welcher Träger des hinteren Dachteiles (4) ist, **dadurch gekennzeichnet, dass** dem hinteren Dachteil (4) ein vorderes Dachteil (2) und ein mittleres Dachteil (3) vorgelagert sind, wobei das vordere Dachteil (2) am mittleren Dachteil (3) und das mittlere Dachteil (3) unmittelbar an der Fahrzeugkarosserie gehalten ist, dass in Ablageposition alle Dachteile (2, 3, 4) gleichsinnig abgelegt sind, und
dass eine das hintere Dachteil (4) am Verdeckkastendeckel (5) haltende Dachteilkinematik (12) als Viergelenkkinematik ausgebildet ist.

2. Hardtop-Fahrzeugdach nach Anspruch 1,
**dadurch gekennzeichnet,**
**dass** das hintere Dachteil (4) über eine zugeordnete Dachteilkinematik (12) am Verdeckkastendeckel (5) gehalten und bei der Überführung zwischen Schließ- und Ablageposition relativ zum Verdeckkastendeckel (5) zu verstellen ist.

3. Hardtop-Fahrzeugdach nach Anspruch 2,
**dadurch gekennzeichnet,**
**dass** das hintere Dachteil (4) in Ablagestellung unterhalb des Verdeckkastendeckels (5) gleichsinnig zu diesem abgelegt ist.

4. Hardtop-Fahrzeugdach nach Anspruch 2 oder 3,
**dadurch gekennzeichnet,**
**dass** das hintere Dachteil (4) verschwenkbar am Verdeckkastendeckel (5) gehalten ist.

5. Hardtop-Fahrzeugdach nach einem der Ansprüche 1 bis 4,
**dadurch gekennzeichnet,**
**dass** das dem hinteren Dachteil (4) vorgelagerte Dachteil (3) über eine Viergelenkkinematik (11) an die Fahrzeugkarosserie (8) gekoppelt ist.

6. Hardtop-Fahrzeugdach nach einem der Ansprüche 1 bis 5,
**dadurch gekennzeichnet,**
**dass** das vordere Dachteil (2) über eine Viergelenkkinematik (10) am mittleren Dachteil (3) gehalten ist.

7. Hardtop-Fahrzeugdach nach einem der Ansprüche 1 bis 6,
**dadurch gekennzeichnet,**
**dass** der Verdeckkastendeckel (5) mit dem Heckdeckel des Fahrzeugs identisch ist.

## Claims

1. Hardtop vehicle roof having three rigid roof parts which can be adjusted between a closed position covering the vehicle interior and a put-away position opening up the vehicle interior, the roof parts (2, 3, 4) being arranged situated one behind the other in the longitudinal direction of the vehicle in the closed position and, in the put-away position, being stored in a folding-top compartment (9) which is to be closed by a folding-top-compartment lid (5) which is a support of the rear roof part (4), **characterized in that** a front roof part (2) and a central roof part (3) are mounted in front of the rear roof part (4), the front roof part (2) being held on the central roof part (3) and the central roof part (3) being held directly on the vehicle body, **in that** all of the roof parts (2, 3, 4) are put away in the same direction in the put-away position, and **in that** a roof-part kinematics (12) which holds the rear roof part (4) on the folding-top-compartment lid (5) is designed as a four-bar-linkage kinematics.

2. Hardtop vehicle roof according to Claim 1, **characterized in that** the rear roof part (4) is held on the folding-top-compartment lid (5) via an associated roof-part kinematics (12) and can be adjusted relative to the folding-top-compartment lid (5) during the transfer between the closed and put-away position.

3. Hardtop vehicle roof according to Claim 2, **characterized in that**, in the put-away position below the folding-top-compartment lid (5), the rear roof part (4) is put away in the same direction as the said lid.

4. Hardtop vehicle roof according to Claim 2 or 3, **characterized in that** the rear roof part (4) is held pivotably on the folding-top-compartment lid (5).

5. Hardtop vehicle roof according to one of Claims 1 to 4, **characterized in that** the roof part (3) which is mounted in front of the rear roof part (4) is coupled to the vehicle body (8) via a four-bar-linkage kinematics (11).

6. Hardtop vehicle roof according to one of Claims 1 to 5, **characterized in that** the front roof part (2) is held on the central roof part (3) via a four-bar-linkage kinematics (10)

7. Hardtop vehicle roof according to one of Claims 1 to 6, **characterized in that** the folding-top-compartment lid (5) is identical to the rear lid of the vehicle.

## Revendications

1. Toit de véhicule de type amovible comprenant trois parties de toit rigides qui peuvent être déplacée entre une position de fermeture recouvrant l'habitacle du véhicule et une position de rangement libérant l'habitacle du véhicule, les parties de toit (2, 3, 4) étant disposées dans la position de fermeture dans la direction longitudinale du véhicule de manière étendue les unes derrière les autres et étant placées dans la position de rangement dans un compartiment de capote (9) qui doit être fermé par un couvercle de compartiment de capote (5) qui est un support de la partie de toit arrière (4), **caractérisé en ce qu'**une partie de toit avant (2) et une partie de toit centrale (3) sont placées avant la partie de toit arrière (4), la partie de toit avant (2) étant maintenue sur la partie de toit centrale (3) et la partie de toit centrale (3) étant maintenue directement à la carrosserie du véhicule, **en ce que** dans la position de rangement, toutes les parties de toit (2, 3, 4) sont rangées dans le même sens, et **en ce qu'**une cinématique de partie de toit (12) retenant la partie de toit arrière (4) contre le couvercle de compartiment de capote (5) est réalisée sous la forme d'une cinématique à quadrilatère articulé.

2. Toit de véhicule de type amovible selon la revendication 1,
**caractérisé en ce que**
la partie de toit arrière (4) est maintenue sur le couvercle de compartiment de capote (5) par le biais d'une cinématique de partie de toit associée (12) et lors du transfert de la position de fermeture dans la position de rangement, doit être déplacée par rapport au couvercle de compartiment de capote (5).

3. Toit de véhicule de type amovible selon la revendication 2,
**caractérisé en ce que**
la partie de toit arrière (4) est rangée en dessous du couvercle de compartiment de capote (5) dans le même sens que celui-ci, dans la position de rangement.

4. Toit de véhicule de type amovible selon la revendication 2 ou 3,
**caractérisé en ce que**
la partie de toit arrière (4) est maintenue de manière pivotante sur le couvercle de compartiment de capote (5).

5. Toit de véhicule de type amovible selon l'une quelconque des revendications 1 à 4,
**caractérisé en ce que**
la partie de toit (3) placée avant la partie de toit arrière (4) est couplée à la carrosserie du véhicule (8) par le biais d'une cinématique à quadrilatère articulé (11).

6. Toit de véhicule de type amovible selon l'une quelconque des revendications 1 à 5,
**caractérisé en ce que**
la partie de toit avant (2) est maintenue à la partie de toit centrale (3) par le biais d'une cinématique à quadrilatère articulé (10).

7. Toit de véhicule de type amovible selon l'une quelconque des revendications 1 à 6,
**caractérisé en ce que**
le couvercle de compartiment de capote (5) est identique au capot arrière du véhicule.
